# EUROPEAN PATENT APPLICATION

(11) **EP 4 716 338 A1**
(43) Date of publication of application: **25.03.2026**
(21) Application number: 24832310.7
(22) Date of filing: 07.06.2024
(51) Int. Cl.: H04W 72/0446, H04W 74/04, H04W 74/00, H04W 84/12

(54) **METHOD AND DEVICE FOR REQUEST-BASED LOW-LATENCY COMMUNICATION IN WIRELESS LAN SYSTEM**

(30) Priority: 30.06.2023 KR 20230085227; 10.07.2023 KR 20230089354
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 22003 (KR); MOON, Ju Seong, Osan-si, Gyeonggi-do 18101 (KR)
(74) Representative: Isarpatent
(86) International application number: PCT/KR2024/007823
(87) International publication number: WO 2025/005530

(57) **Abstract**

A method and apparatus for request-based low latency communication in a WLAN system are provided. A method of operating a first device in a WLN system includes receiving downlink data from a second device that is a transmit opportunity (TXOP) holder, transmitting information that requests sharing of the TXOP to the second device, receiving information on a shared TXOP from the second device, and obtaining the shared TXOP, and the shared TXOP is a time segment during which the first device is able to transmit uplink data.

## Description

### Technical Field

The present invention relates to a wireless local area network (WLAN) system, and more particularly, to a method and apparatus for request-based low latency communication in a WLAN system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

With the emergence of applications requiring higher throughput and applications requiring real-time transmission, an expanded frequency bandwidth and/or an efficient retransmitting operation may be supported in a WLAN. In addition, an operation of simultaneously using multiple links or links may be supported.

Meanwhile, the technologies that are described in the Background section are written to improve the understanding of the background of the present disclosure and may include content that is not already known to those of ordinary skill in the art to which the present disclosure belongs.

### Description of Invention

### Technical Problem

The present disclosure is directed to providing a method and apparatus for quickly transmitting data stored in a WLAN terminal during data reception of the WLAN terminal from another WLAN terminal in a WLAN system.

The present disclosure is directed to providing a method and apparatus for quickly transmitting data that is stored in a terminal and requires low latency in a WLAN system.

The present disclosure is directed to providing a method and apparatus of requesting scheduling to transmit data during data reception in a WLAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method of operating a first device in a WLAN system includes receiving at least one first frame from a second device, transmitting at least one second frame including information that requests sharing of a TXOP to the second device, and receiving at least one third frame including information on the shared TXOP from the second device.

According to another embodiment of the present disclosure, a method of operating a second device in a WLAN system includes obtaining a TXOP by performing a channel access procedure, transmitting at least one first frame, receiving at least one second frame including information that requests sharing of the TXOP from a first device, and transmitting at least one third frame including information on the shared TXOP to the first device.

According to still another embodiment of the present disclosure, a first device in a WLAN system includes a transceiver and a processor coupled to the transceiver, and the processor may control the transceiver to receive at least one first frame from a second device, to transmit a second frame including information that requests sharing of a TXOP to the second device, and to receive a third frame including information that responds to the information that requests the sharing from the second device.

According to yet another embodiment of the present disclosure, a second device in a WLAN system includes a transceiver and a processor coupled to the transceiver, and the processor may obtain a TXOP by performing a channel access procedure, control the transceiver to transmit at least one first frame, control the transceiver to receive at least one second frame including information that requests sharing of the TXOP from a first device, and control the transceiver to transmit at least one third frame including information on the shared TXOP to the first device.

According to yet another embodiment of the present disclosure, the first device may transmit at least one fourth frame to the second device, and the fourth frame may include at least one of a data frame and a control frame.

According to yet another embodiment of the present disclosure, the information that requests the sharing of the TXOP may include at least one of information indicating a start time of the sharing and information indicating a size of a resource to be shared.

According to yet another embodiment of the present disclosure, the information indicating the start time of the sharing may include information indicating a sharing start time of at least one of each access category (AC) and each traffic indication (TID).

According to yet another embodiment of the present disclosure, the size of the resource may include a size of data or a size in terms of time.

According to yet another embodiment of the present disclosure, the third frame may include at least one of a trigger frame and a data frame.

According to yet another embodiment of the present disclosure, the third frame may include information that responds to the information that requests the sharing of the TXOP.

According to yet another embodiment of the present disclosure, the information on the shared TXOP may include at least one of a size of the shared TXOP and transmission mode information of the first device.

According to yet another embodiment of the present disclosure, the transmission mode information may include information associated with a transmission target device of the first device.

The features briefly summarized above with respect to the present disclosure are provided as an example only to explain the detailed description and are not construed to limit the scope of the present disclosure.

### Advantageous Effects

According to the present disclosure, it is possible to provide a WLAN terminal and a communication method that are capable of requesting to share a TXOP obtained by another WLAN terminal so that data requiring low latency is quickly transmitted during communication in a WLAN system.

According to the present disclosure, it is possible to provide a WLAN terminal and a communication method that are capable of quickly transmitting data requiring low latency transmission and thus reducing transmission latency of data in a WLAN system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure.

### Description of the Drawings

FIG. 1 illustrates a block diagram of a communication node in a WLAN system.
FIG. 2 illustrates the concept of multiple links set between multi link devices (MLDs) in a WLAN system.
FIG. 3 illustrates a first embodiment of a request-based low latency communication method in a WLAN system.
FIG. 4 illustrates a second embodiment of a request-based low latency communication method in a WLAN system.
FIG. 5 illustrates a third embodiment of a request-based low latency communication method in a WLAN system.
FIG. 6 illustrates a fourth embodiment of a request-based low latency communication method in a WLAN system.
FIG. 7 illustrates a method of operating a first station (STA) according to an embodiment of the present disclosure.
FIG. 8 illustrates a method of operating an access point (AP) according to an embodiment of the present disclosure.

### Mode of the Invention

Hereinafter, embodiments of the present disclosure will be described in detail with reference to the accompanying drawings such that those skilled in the art may easily implement the embodiments. However, the present disclosure may be embodied in different forms and is not limited to the embodiments described herein.

In describing the present disclosure, a detailed description of known functions and configurations will be omitted when it may obscure the subject matter of the present disclosure. In addition, in the drawings, a portion that is irrelevant to the description of the present disclosure is omitted, and similar reference numerals refer to similar portions.

In the present disclosure, when a component is "connected", "coupled" or "linked" to another component, it may include not only a direct connection relationship but also an indirect connection relationship in which another component exists in therebetween. In addition, when a component "includes" or "has" other components, it means that other components may be further included rather than excluding other components unless the context clearly indicates otherwise.

In the present disclosure, terms such as first, second, etc. are used only for the purpose of distinguishing one component from other components, and, unless otherwise specified, the order or importance of the components is not limited. Accordingly, within the scope of the present disclosure, a first component in one embodiment may be referred to as a second component in another embodiment, and, similarly, a second component in one embodiment is referred to as a first component in another embodiment.

In the present disclosure, components that are distinguished from each other are intended to clearly describe each of their characteristics, and do not necessarily mean that the components are separated from each other. That is, a plurality of components may be integrated to form one hardware or software unit, or one component may be distributed to form a plurality of hardware or software units. Accordingly, even if not specifically mentioned, such integrated or distributed embodiments are also included in the scope of the present disclosure.

In the present disclosure, components described in various embodiments do not necessarily mean essential components, and some thereof may be optional components. Accordingly, an embodiment composed of a subset of components described in one embodiment is also included in the scope of the present disclosure. In addition, embodiments including other components in addition to components described in various embodiments are also included in the scope of the present disclosure.

In the present disclosure, expressions of positional relationships used herein, such as upper, lower, left, and right, are provided for convenience of description, and in the case where the drawings shown in the present specification are viewed in reverse, the positional relationships described in the specification may be interpreted in reverse.

Hereinafter, a wireless LAN (WLAN) communication system to which the embodiments of the present invention are applied will be described. A WLAN communication system to which the embodiments of the present invention are applied is not limited to the description below, and the embodiments of the present invention may be applied to various WLAN communication systems. A WLAN communication system may be referred to as "a WLAN" or "a WLAN system".

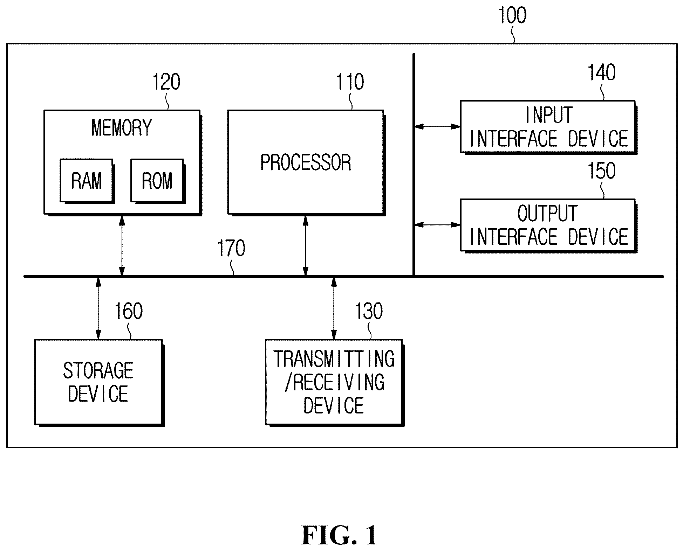

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

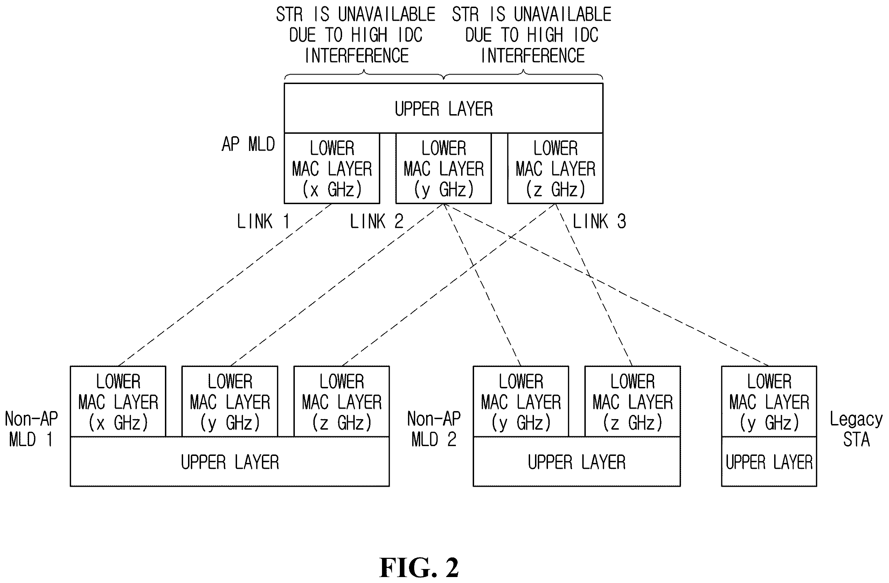

FIG. 2 illustrates the concept of multiple links set between multi link devices (MLDs) in a WLAN system.

Referring to FIG. 2, an MLD may have one medium access control (MAC) address. In embodiments, an MLD may be an AP MLD and/or a non-AP MLD. The MAC address of an MLD may be used in a multi-link setup procedure between a non-AP MLD and an AP MLD. The MAC address of an AP MLD may be different from the MAC address of a non-AP MLD. An Ap(s) associated with an AP MLD may have a different MAC address, and an STA(s) associated with a non-AP MLD may have a different MAC address. APs present in an AP MLD and having different MAC addresses may be in charge of respective links and serve as independent APs.

STAs present in a non- AP MLD and having different MAC addresses may be in charge of respective links and serve as independent STAs. A non-AP MLD may be referred to as a STA MLD. An MLD may support a simultaneous transmit and receive (STR) operation. In this case, the MLD may perform a transmitting operation on Link 1 and a receiving operation on Link 2. An MLD supporting an STR operation may be referred to as an STR MLD (e.g., an STR AP MLD or an STR non-AP MLD). In embodiments, a link may be a channel or a band. A device not supporting an STR operation may be referred to as a non-STR (NSTR) AP MLD or an NSTR non-AP MLD (or NSTR STA MLD).

An MLD may transmit and receive a frame over multiple links using a non-contiguous bandwidth extension scheme (e.g., 80 MHz+80 MHz). A multi-link operation may include multi-band transmission. An AP MLD may include a plurality of APs, and the plurality of APs may operate on different links. A plurality of APs may each perform a function of a lower MAC layer. A plurality of APs may each be referred to as "a communication node" or "a lower entity". A communication node (that is, AP) may operation according to the control of an upper layer (or the processor 110 illustrated in FIG. 1). A non-AP MLD may include a plurality of STAs, and the plurality of STAs may operate on different links. A plurality of STAs may each be referred to as "a communication node" or "a lower entity". A communication node (e.g., STA) may operate according to the control of an upper layer (or the processor 110 illustrated in FIG. 1).

An MLD may perform communication over multiple bands. For example, an MLD may perform communication using a bandwidth of 40 MHz in a band of 2.4 GHz according to a channel expansion scheme (e.g., a bandwidth expansion scheme) and perform communication using a bandwidth of 160 MHz in a band of 5 GHz according to the channel expansion scheme. An MLD may perform communication using the bandwidth of 160 MHz in the band of 5 GHz and perform communication using the bandwidth of 160 MHz in a band of 6 GHz. A single frequency band (e.g., a single channel) used by an MLD may be defined as a single link. Alternatively, a plurality of links may be set in a single frequency band used by an MLD. For example, an MLD may set one link in the band of 2.4 GHz and set two links in the band of 6 GHz. The links may be referred to as a first link, a second link, and a third link respectively. Alternatively, the links may be referred to as Link 1, Link 2, and Link 3 respectively. A link number may be set by an AP, and an identifier (ID) may be assigned to each link.

An MLD (e.g., an AP MLD and/or a non-AP MLD) may set multiple links by performing an access procedure and/or a negotiation procedure for a multi-link operation. In this case, the number of links and/or a link to be used among multiple links may be set. A non-AP MLD (e.g., a STA) may identify information on a band in which communication with an AP MLD is possible. In a negotiation procedure for a multi-link operation between a non-AP MLD and an AP MLD, the non-AP MLD may set one or more links among links supported by the AP MLD to be used for the multi-link operation. A STA (e.g., a STA according to IEEE 802.11a/b/g/n/ac/ax) not supporting the multi-link operation may access one or more links among multiple links supported by an AP MLD.

When a band gap between multiple links (e.g., a band gap between Link 1 and Link 2 in the frequency domain) is sufficient, an MLD may perform an STR operation. For example, the MLD may transmit physical layer convergence procedure (PLCP) protocol data (PPDU) 1 using Link 1 among the multiple links and receive PPDU 2 using Link 2 among the multiple links. On the other hand, when a band gap between multiple links is not sufficient and an MLD performs an STR operation, in-device coexistence (IDC) interference, that is, interference between multiple links may occur. Accordingly, when a band gap between multiple links is not sufficient, an MLD may not perform an STR operation. A pair of links in the above-described interference relationship may be a pair of links limited to non simultaneous transmit and receive (NSTR). Here, an MLD may be an NSTR AP MLD or an NSTR non-AP MLD.

For example, multiple links including Link 1, Link 2, and Link 3 may be set between an AP MLD and a non-AP MLD 1. When a band gap between Link 1 and Link 3 is sufficient, the AP MLD may perform an STR operation using Link 1 and Link 3. That is, the AP MLD may transmit a frame using Link 1 and receive a frame using Link 3. When a band gap between Link 1 and Link 2 is not sufficient, the AP MLD may not perform the STR operation using Link 1 and Link 2. When a band gap between Link 2 and Link 3 is not sufficient, the AP MLD may not perform the STR operation using Link 2 and Link 3.

Meanwhile, in a WLAN system, a negotiation procedure for a multi-link operation may be performed in an access procedure between an STA and an AP.

A device supporting multiple links (e.g., an AP or an STA) may be referred to as a multi-link device (MLD). An AP supporting multiple links may be referred to as an AP MLD, and an STA supporting multiple links may be referred to as a non-AP MLD or an STA MLD. An AP MLD may have a physical address (e.g., an MAC address) for each link. An AP MLD may be implemented as if an AP in charge of each link exists separately. A plurality of APs may be managed in a single AP MLD. Accordingly, coordination may be possible among a plurality of APs that belong to the same AP MLD. An STA MLD may have a physical address (e.g., an MAC address) for each link. An STA MLD may be implemented as if an STA in charge of each link exists separately. A plurality of STAs may be managed in a single STA MLD. Accordingly, coordination may be possible among a plurality of STAs that belong to the same STA MLD.

For example, AP1 of an AP MLD and STA1 of an STA MLD may each be in charge of a first link and perform communication using the first link. AP2 of the AP MLD and STA2 of the STA MLD may each be in charge of a second link and perform communication using the second link. STA2 may receive state change information for the first link on the second link. In this case, the STA MLD may collect information (e.g., state change information) received from each link and control an operation performed by STA1 based on the collected information.

Next, methods for transmitting and receiving data in a wireless LAN system will be described. When a method (e.g., transmission or reception of a signal) performed at a first communication node among communication nodes is described, a second communication node corresponding to it may perform a method (e.g., reception or transmission of a signal) corresponding to the method performed at the first communication node. That is, when an operation of an STA is described, an AP corresponding to it may perform an operation corresponding to the operation of the STA. On the other hand, when an operation of an AP is described, an STA corresponding to it may perform an operation corresponding to the operation of the AP. In an embodiment, an operation of an STA may be interpreted as an operation of an STA MLD, an operation of an STA MLD may be interpreted as an operation of an STA, an operation of an AP may be interpreted as an operation of an AP MLD, and an operation of an AP MLD may be interpreted as an operation of an AP.

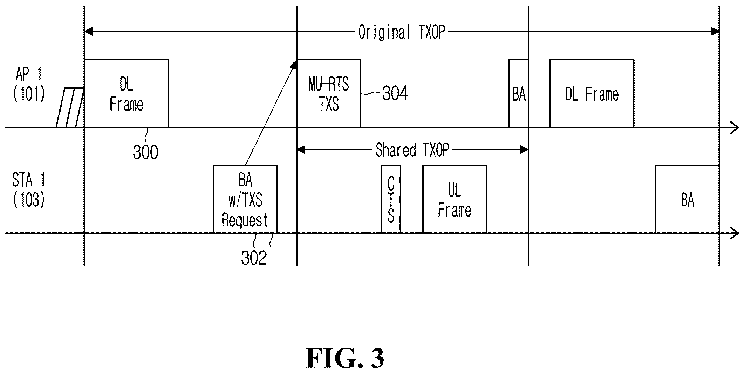

FIG. 3 illustrates a first embodiment of a request-based low latency transmission method in a WLAN system.

Referring to FIG. 3, an AP 1 101 and an STA 1 103 may operate in the WLAN system. The AP 1 101 may perform a channel access procedure. The channel access procedure may be an enhanced distributed channel access (EDCA) backoff operation per access category (AC). When an EDCA backoff counter of an EDCA function (EDCAF) per AC reaches 0 and the EDCAF per AC determines transmission, the AP 1 101 obtains a TXOP. Here, the TXOP is a time interval during which a channel is accessed without contention and data transmission is possible on the accessed channel. The obtained TXOP may be referred to as an original TXOP. The AP 1 101 is a TXOP holder of the original TXOP. Within the original TXOP, the AP 1 101 may transmit at least one frame (e.g., a physical layer protocol data unit (PPDU), a media access control layer protocol data unit (MPDU), and an aggregated MPDU (A-MPDU)). The STA 1 103 may receive a downlink frame 300 from the AP 1 101. In response to the downlink frame 300, the STA 1 103 may transmit a BlockAck (BA) frame 302 to the AP 1 101. The STA 1 103 may hold a frame (or data) that needs to be quickly transmitted. The STA 1 103 may include TXOP sharing request information in the BA frame 302. Through the TXOP sharing request information, the STA 1 103 may be allocated a resource within an original TXOP of the AP 1 101. The TXOP sharing request information may include at least one of TXOP request information, delay bound information, information on the size of a requested resource, and information regarding whether to perform P2P communication. The TXOP sharing request information indicates that an STA (e.g., the STA 1 103 that transmits a TXOP sharing request wishes to share a TXOP of a TXOP holder (e.g., the AP 1 101). The delay bound information indicates until when the STA (e.g., the STA 1 103) wishes to share the TXOP from the TXOP holder. For example, when the STA (e.g., the STA 1 103) specifies the delay bound information as 1 ms, this indicates that the STA (e.g., the STA 1 103) wishes to share the TXOP from the TXOP holder within 1 ms. When the STA specifies the delay bound information as 1 ms, the STA may hold a data frame that needs to be transmitted within 1 ms. That is, a frame that needs to be transmitted quickly may exist in the STA's queue. The delay bound information may further include per AC or per TID time information. For example, the STA may indicate the delay bound information for each AC such as 1 ms for AC_VO and 5 ms for AC_BE. Alternatively, the STA may indicate the delay bound information for each TID such as 1 ms for TID 1 and 3 ms for TID 3. An indication of the delay bound information for each AC and an indication of the delay bound information for each TID may be used concurrently. The information on the size of a requested resource may indicate the size of a resource that the STA (e.g., the STA 1 103) wishes to share. For example, the size of the resource may be indicated by time information. In another method, the size of the resource may be indicated by information on the size of data to be transmitted. The information regarding whether to perform P2P communication may indicate whether the STA (e.g., the STA 1 103) wishes to perform P2P communication. The TXOP sharing request information may be included not only in the BA frame 302 but also in every type of frames that the STA 1 103 transmits to the AP 1 101. The TXOP sharing request information may be included in a frame (e.g., a BA frame) transmitted by the STA 1 103 to the AP 1 101 in the form of an A-Control field within the MAC header of a QoS Null frame. For example, the BA frame and the QoS Null frame may be formed into an A-MPDU. In another method, the TXOP sharing request information may be included in a frame transmitted by the STA 1 103 to the AP 1 101 in the form of an indication bit, a subfield, an information element, or other forms.

When receiving the TXOP sharing request information from the STA 1 103, the AP 1 101 may transmit a multi-user request to send (MU-RTS) TXOP sharing (TXS) frame 304 after a short inter-frame space (SIFS) period from a reception complete time of a frame (e.g., the BA frame 302) containing the TXOP sharing request information. The MU-RTS TXS frame 304 is a trigger frame. The MU-RTS TXS frame 304 may be transmitted via broadcast. That is, a receiver address indicated in the MAC header of the MU-RTS TXS frame is a broadcast address. The user info subfield of the MU-RTS TXS frame 304 may indicate an association ID (AID) of the STA 1 103. The AID of the STA 1 103 indicated in the user info subfield indicates that the STA 1 103 will share a TXOP. The MU-RTS TXS frame 304 may indicate a length of the TXOP that the AP 1 101 shares with the STA 1 103. The MU-RTS TXS frame 304 may indicate a TXS mode 1 in which the STA 1 103 is capable of performing communication with the AP 1 101 and a TXS mode 2 in which the STA 1 103 is capable of performing P2P communication and communication with the AP 1 101. Information included in the MU-RTS TXS frame 304 may be set based on the TXOP sharing request information transmitted by the STA 1 103 to the AP 1 101. The AP 1 101 may share a TXOP with the STA 1 103 based on transmission of the MU-RTS TXS frame 304. The TXOP thus shared is referred to as a "shared TXOP". The shared TXOP is a time segment within the original TXOP during which a device that is not the TXOP holder may transmit data without contention. For example, the STA 1 103 is able to transmit data within the shared TXOP. Within the shared TXOP, the STA 1 103 may transmit data only to the AP 1 101 or to the AP 1 101 and/or other STAs according to a TXS mode. When the shared TXOP is terminated, the AP 1 101 may transmit a frame to the STA 1 103 and/or other STAs within the remaining segment of the original TXOP. The shared TXOP may also be referred to as an allocated time or allocated duration in the MU-RTS TXS frame.

In another method, when the STA 1 103 transmits the TXOP sharing request information to the AP 1 101, the AP 1 101 may not perform a transmission for a duration corresponding to the information on the size of the requested resource indicated by the STA 1 103, instead of performing a TXOP sharing operation (e.g., a TXOP sharing operation through transmission of the MU-RTS TXS frame 304). The STA 1 103 may perform P2P communication within a TXOP of the AP 1 101. Alternatively, the STA 1 103 may perform non-802.11 communication within a TXOP of the AP 1 101. When the P2P communication or non-802.11 communication of the STA 1 103 ends, the AP 1 101 may transmit an additional frame within the remaining TXOP.

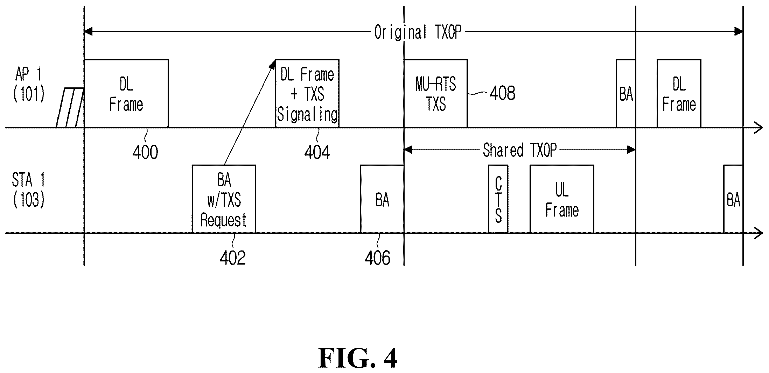

FIG. 4 illustrates a second embodiment of a request-based low latency transmission method in a WLAN system.

Referring to FIG. 4, the AP 1 101 and the STA 1 103 may operate. The AP 1 101 may perform a channel access procedure. The channel access procedure may be, for example, a per-AC EDCA backoff operation. When an EDCA backoff counter of an EDCA function (EDCAF) per AC reaches 0 and the EDCAF per AC determines transmission, the AP 1 101 obtains a TXOP. The TXOP obtained by the AP 1 101 may be referred to as an original TXOP. The AP 1 101 is a TXOP holder of the original TXOP. Within the original TXOP, the AP 1 101 may transmit a plurality of frames (e.g., a PPDU, an MPDU, and an A-MPDU). The STA 1 103 may receive a downlink frame 400 from the AP 1 101. In response to the downlink frame 400, the STA 1 103 may transmit a BlockAck (BA) frame 402 to the AP 1 101. The STA 1 103 may hold a frame (or data) that needs to be quickly transmitted. The BA frame 402 transmitted by the STA 1 103 may include TXOP sharing request information. Through the TXOP sharing request information, the STA 1 103 may be allocated a resource within the original TXOP of the AP 1 101. The TXOP sharing request information may include at least one of TXOP request information, delay bound information, information on the size of a requested resource, and information regarding whether to perform P2P communication. The TXOP sharing request information indicates that an STA (e.g., the STA 1 103 that transmits a TXOP sharing request wishes to share a TXOP of a TXOP holder (e.g., the AP 1 101). The delay bound information indicates until when the STA (e.g., the STA 1 103) wishes to share the TXOP from the TXOP holder. For example, when the delay bound information is specified as 1 ms, the delay bound information indicates that an STA (e.g., the STA 1 103) wishes to share the TXOP from the TXOP holder within 1 ms. The delay bound information may further include per AC or per TID time information. For example, the delay bound information may indicate a TXOP sharing time for each AC such as 1 ms for AC_VO and 5 ms for AC_BE. Alternatively, the delay bound information may be indicated as a TXOP sharing time for each TID such as 1 ms for TID 1 and 3 ms for TID 3. An indication of the delay bound information for each AC and an indication of the delay bound information for each TID may be used concurrently. The information on the size of a requested resource may indicate the size of a resource that the STA (e.g., the STA 1 103) wishes to share. For example, the size of the resource may indicate time information that the STA (e.g., the STA 1 103) wishes to share. In another method, the size of the resource may indicate information on the size of data to be transmitted. The information regarding whether to perform P2P communication may indicate whether the STA (e.g., the STA 1 103) wishes to perform P2P communication. The TXOP sharing request information may be included not only in the BA frame 402 but also in every type of frames that the STA 1 103 transmits to the AP 1 101. The TXOP sharing request information may be included in a frame (e.g., the BA frame 402) transmitted by the STA 1 103 to the AP 1 101 in the form of an A-Control within the MAC header of a QoS Null frame. For example, the BA frame and the QoS Null frame may be formed into an A-MPDU. In another method, the TXOP sharing request information may be included in a frame transmitted by the STA 1 103 to the AP 1 101 in the form of an indication bit, a subfield, an information element, or other forms.

When receiving the TXOP sharing request information from the STA 1 103, the AP 1 101 may transmit a data frame 404 to the STA 1 103 after a SIFS period from a reception complete time of a frame (e.g., the BA frame 402) containing the TXOP sharing request information. The data frame 404 may include, for example, a QoS Null frame. The data frame 404 may include information on a response of the AP 1 101 to the TXOP sharing request of the STA 1 103. The information on the response to the TXOP sharing request may include information on acceptance or rejection of the TXOP sharing request of the STA 1 103. The information on the response to the TXOP sharing request may be included in the form of A-control of the MAC header of the data frame 404. In another method, the information on the response to the TXOP sharing request may be included in a frame transmitted by the AP 1 101 to the STA 1 103 in the form of an indication bit, a subfield, an information element, or other forms. When the AP 1 101 accepts the TXOP sharing request of the STA 1 103, the AP 1 101 may indicate acceptance of the request of the STA 1 103 in the information on the response to the TXOP sharing request. After the AP 1 101 transmits the data frame 404 to the STA 1 103 and receives a BA frame 406 from the STA 1 103, the AP 1 101 may transmit a MU-RTS TXS frame 408. The MU-RTS TXS frame 408 is a trigger frame. The MU-RTS TXS frame 408 may be transmitted via broadcast. That is, a receiver address indicated in the MAC header of the MU-RTS TXS frame is a broadcast address. The user info subfield of the MU-RTS TXS frame 408 may indicate an AID of the STA 1 103. The AID of the STA 1 103 indicated in the user info subfield indicates that the STA 1 103 will share a TXOP. The MU-RTS TXS frame 408 may indicate a length of the TXOP that the AP 1 101 shares with the STA 1 103. The MU-RTS TXS frame 408 may indicate a TXS mode 1 in which the STA 1 103 is capable of performing communication with the AP 1 101 and a TXS mode 2 in which the STA 1 103 is capable of performing P2P communication and communication with the AP 1 101. Information included in the MU-RTS TXS frame 408 may be set based on the TXOP sharing request information transmitted by the STA 1 103 to the AP 1 101. The AP 1 101 may share a TXOP with the STA 1 103 based on transmission of the MU-RTS TXS frame 408. The TXOP thus shared is referred to as a "shared TXOP". Within the shared TXOP, the STA 1 103 may perform a transmission only to the AP 1 101 or perform a transmission to the AP 1 101 and/or other STAs according to a TXS mode. When the shared TXOP is terminated, the AP 1 101 may transmit a frame to the STA 1 103 and/or other STAs within the remaining segment of the original TXOP. The shared TXOP may also be referred to as an allocated time or allocated duration in the MU-RTS TXS frame.

In another method, when the STA 1 103 transmits the TXOP sharing request information to the AP 1 101, the AP 1 101 may not perform a transmission for a duration corresponding to the information on the size of the requested resource indicated by the STA 1 103, instead of performing a TXOP sharing operation (e.g., a TXOP sharing operation through transmission of the MU-RTS TXS frame 408). The STA 1 103 may perform P2P communication within a TXOP of the AP 1 101. Alternatively, the STA 1 103 may perform non-802.11 communication within a TXOP of the AP 1 101. When the P2P communication or non-802.11 communication of the STA 1 103 ends, the AP 1 101 may transmit an additional frame within the remaining TXOP.

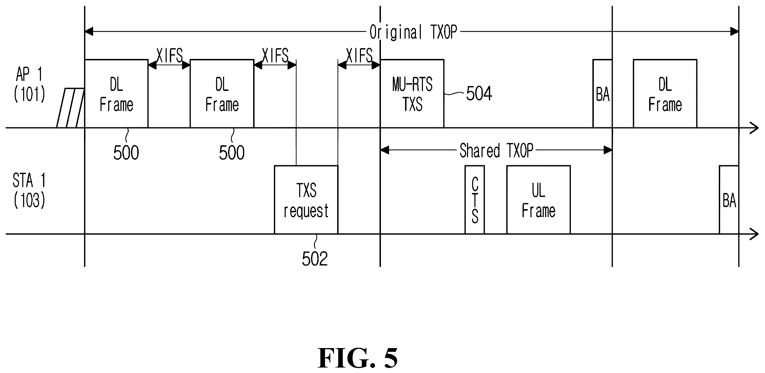

FIG. 5 illustrates a third embodiment of a request-based low latency communication method in a WLAN system.

Referring to FIG. 5, the AP 1 101 and the STA 1 103 may operate in a WLAN channel. The AP 1 101 may perform a channel access procedure. The channel access procedure may be a per-AC EDCA backoff operation. When an EDCA backoff counter of an EDCA function (EDCAF) per AC reaches 0 and the EDCAF per AC determines transmission, the AP 1 101 obtains a TXOP. The obtained TXOP may be referred to as an original TXOP. The AP 1 101 is a TXOP holder of the original TXOP. Within the original TXOP, the AP 1 101 may transmit a plurality of frames (e.g., a PPDU, an MPDU, and an A-MPDU). A plurality of frames 500 may be transmitted consecutively with an XIFS. The XIFS may be shorter than or equal to a SIFS. Alternatively, the XIFS may be a longer space (e.g., a PIFS) than the SIFS. Between XIFSs, the STA 1 103 may transmit the frame 500 to the AP 1 101. The STA 1 103 may receive a downlink frame 500 from the AP 1 101. The STA 1 103 may hold a frame (or data) that needs to be quickly transmitted. The STA 1103 may transmit a frame 502 including the TXOP sharing request information between XIFS frames that are transmitted by the AP 1 101. The STA 1 103 may be allocated a resource within the original TXOP of the AP 1 101 by using the TXOP sharing request information. The TXOP sharing request information may include at least one of TXOP request information, delay bound information, information on the size of a requested resource, and information regarding whether to perform P2P communication. The TXOP sharing request information indicates that an STA (e.g., the STA 1 103 that transmits a TXOP sharing request wishes to share a TXOP of a TXOP holder (e.g., the AP 1 101). The delay bound information indicates until when the STA (e.g., the STA 1 103) needs to share the TXOP from the TXOP holder. For example, when the STA (e.g., the STA 1 103) specifies the delay bound information as 1 ms, the delay bound information indicates that the STA (e.g., the STA 1 103) wishes to share the TXOP from the TXOP holder within 1 ms. The delay bound information may further include per AC or per TID time information. For example, the STA (e.g., the STA 1 103) may indicate the delay bound information for each AC such as 1 ms for AC_VO and 5 ms for AC_BE. Alternatively, the STA may indicate the delay bound information for each TID such as 1 ms for TID 1 and 3 ms for TID 3. An indication of the delay bound information for each AC and an indication of the delay bound information for each TID may be used concurrently.

The information on the size of a requested resource may indicate the size of a resource that the STA (e.g., the STA 1 103) wishes to share. For example, the information on the size of the resource may indicate time information that the STA (e.g., the STA 1 103) wishes to share. In another method, the information on the size of the resource may indicate information on the size of data to be transmitted. The information regarding whether to perform P2P communication may indicate whether the STA (e.g., the STA 1 103) wishes to perform P2P communication. The TXOP sharing request information may also be included in every type of frames that the STA 1 103 transmits to the AP 1 101. The TXOP sharing request information may be included in a frame transmitted by the STA 1 103 to the AP 1 101 in the form of an A-Control within the MAC header of a QoS Null frame. For example, the BA frame and the QoS Null frame may be formed into an A-MPDU. In another method, the TXOP sharing request information may be included in a frame transmitted by the STA 1 103 to the AP 1 101 in the form of an indication bit, a subfield, an information element, or other forms.

When receiving the TXOP sharing request information from the STA 1 103, the AP 1 101 may transmit a MU-RTS TXS frame 504 after a SIFS period from a reception complete time of the frame 502 containing the TXOP sharing request information. The MU-RTS TXS frame 504 is a trigger frame. The MU-RTS TXS frame 504 may be transmitted via broadcast. That is, a receiver address indicated in the MAC header of the MU-RTS TXS frame is a broadcast address. The user info subfield of the MU-RTS TXS frame 504 may indicate an AID of the STA 1 103. The AID of the STA 1 103 indicated in the user info subfield indicates that the STA 1 103 will share a TXOP. The MU-RTS TXS frame 504 may indicate a length of the TXOP that the AP 1 101 shares with the STA 1 103. The MU-RTS TXS frame 504 may indicate a TXS mode 1 in which the STA 1 103 is capable of performing communication with the AP 1 101 and a TXS mode 2 in which the STA 1 103 is capable of performing P2P communication and communication with the AP 1 101. Information included in the MU-RTS TXS frame 504 may be set based on the TXOP sharing request information transmitted by the STA 1 103 to the AP 1 101. The AP 1 101 may share a TXOP with the STA 1 103 based on transmission of the MU-RTS TXS frame 504. The TXOP thus shared is referred to as a "shared TXOP". Within the shared TXOP, the STA 1 103 may perform a transmission only to the AP 1 101 or perform a transmission to the AP 1 101 and/or other STAs according to a TXS mode. When the shared TXOP is terminated, the AP 1 101 may transmit a frame to the STA 1 103 and/or other STAs within the remaining segment of the original TXOP. The shared TXOP may also be referred to as an allocated time or allocated duration in the MU-RTS TXS frame.

In another method, when the STA 1 103 transmits the TXOP sharing request information to the AP 1 101, the AP 1 101 may not perform a transmission for a duration corresponding to the information on the size of the requested resource indicated by the STA 1 103, instead of performing a TXOP sharing operation (e.g., a TXOP sharing operation through transmission of the MU-RTS TXS frame 504). The STA 1 103 may perform P2P communication within a TXOP of the AP 1 101. Alternatively, the STA 1 103 may perform non-802.11 communication within a TXOP of the AP 1 101. When the P2P communication or non-802.11 communication of the STA 1 103 ends, the AP 1 101 may transmit an additional frame within the remaining TXOP.

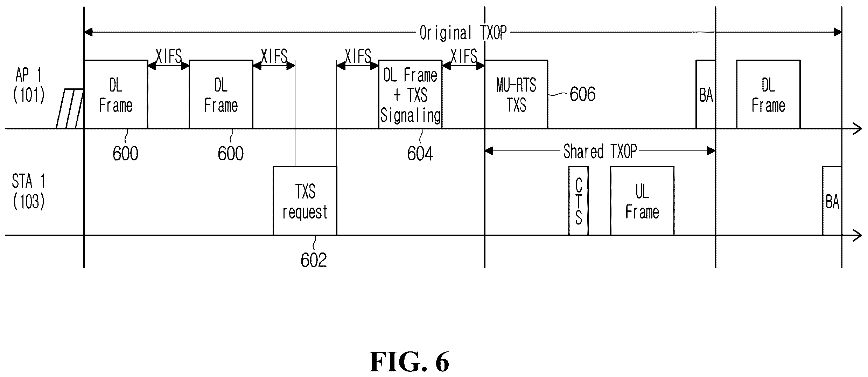

FIG. 6 illustrates a fourth embodiment of a request-based low latency communication method in a WLAN system.

Referring to FIG. 6, the AP 1 101 and the STA 1 103 may operate. The AP 1 101 may perform a channel access procedure. The channel access procedure may be a per-AC EDCA backoff operation. When an EDCA backoff counter of an EDCA function (EDCAF) per AC reaches 0 and the EDCAF per AC determines transmission, the AP 1 101 obtains a TXOP. The obtained TXOP may be referred to as an original TXOP. The AP 1 101 is a TXOP holder of the original TXOP. Within the original TXOP, the AP 1 101 may transmit a plurality of frames (e.g., a PPDU, an MPDU, and an A-MPDU). A plurality of frames 600 may be transmitted consecutively with an XIFS. The XIFS may be shorter than or equal to a SIFS. Alternatively, the XIFS may be a longer space (e.g., a PIFS) than the SIFS. Between XIFSs, the STA 1 103 may transmit the frame 600 to the AP 1 101. The STA 1 103 may receive a downlink frame 600 from the AP 1 101. The STA 1 103 may hold a frame (or data) that needs to be quickly transmitted. The STA 1103 may transmit a frame 602 including the TXOP sharing request information between XIFS frames that are transmitted by the AP 1 101. Through the TXOP sharing request information, the STA 1 103 may be allocated a resource within an original TXOP of the AP 1 101. The TXOP sharing request information may include at least one of TXOP request information, delay bound information, information on the size of a requested resource, and information regarding whether to perform P2P communication. The TXOP sharing request information indicates that an STA (e.g., the STA 1 103 that transmits a TXOP sharing request wishes to share a TXOP of a TXOP holder (e.g., the AP 1 101). The delay bound information indicates until when the STA (e.g., the STA 1 103) needs to share the TXOP from the TXOP holder. For example, when the delay bound information is 1 ms, the delay bound information indicates that the STA (e.g., the STA 1 103) wishes to share the TXOP from the TXOP holder within 1 ms. When the STA specifies the delay bound information as 1 ms, the STA may hold a data frame that needs to be transmitted within 1 ms. That is, a frame that needs to be transmitted quickly may exist in the STA's queue. The delay bound information may further include per AC or per TID time information. For example, the delay bound information may indicate time information for each AC such as 1 ms for AC_VO and 5 ms for AC_BE. Alternatively, the delay bound information may indicate time information for each TID such as 1 ms for TID 1 and 3 ms for TID 3. An indication of the delay bound information for each AC and an indication of the delay bound information for each TID may be used concurrently. The information on the size of a requested resource indicates the size of a resource that the STA (e.g., the STA 1 103) wishes to share. For example, the size of the resource may be indicated by time information. In another method, the size of the resource may be indicated by information on the size of data to be transmitted. The information regarding whether to perform P2P communication may indicate whether the STA (e.g., the STA 1 103) wishes to perform P2P communication. The TXOP sharing request information may also be included in every type of frames that the STA 1 103 transmits to the AP 1 101. The TXOP sharing request information may be included in a frame transmitted by the STA 1 103 to the AP 1 101 in the form of an A-Control within the MAC header of a QoS Null frame. For example, the BA frame and the QoS Null frame may be formed into an A-MPDU. In another method, the TXOP sharing request information may be included in a frame transmitted by the STA 1 103 to the AP 1 101 in the form of an indication bit, a subfield, an information element, or other forms.

When receiving the TXOP sharing request information from the STA 1 103, the AP 1 101 may transmit a data frame 604 to the STA 1 103 after a SIFS period from a reception complete time of a frame 602 containing the TXOP sharing request information. The data frame 604 may include a QoS Null frame. For example, the BA frame and the QoS Null frame may be formed into an A-MPDU. The data frame 604 may include information on a response to a TXOP sharing request. The information on the response to the TXOP sharing request includes a response of the AP 1 101 to the TXOP sharing request of the STA 1 103. The information on the response to the TXOP sharing request includes information on acceptance or rejection of the TXOP sharing request of the STA 1 103. The information on the response to the TXOP sharing request may be included in the form of A-control of the MAC header of the data frame 604. In another method, the information on the response to the TXOP sharing request may be included in a frame transmitted by the AP 1 101 to the STA 1 103 in the form of an indication bit, a subfield, an information element, or other forms. When the AP 1 101 accepts the TXOP sharing request of the STA 1 103, the AP 1 101 may indicate acceptance of the request of the STA 1 103 in the information on the response to the TXOP sharing request. After the AP 1 101 transmits the data frame 604 to the STA 1 103, the AP1 101 may transmit a MU-RTS TXS frame 606. The MU-RTS TXS frame 606 is a trigger frame. The MU-RTS TXS frame 606 may be transmitted via broadcast. The user info subfield of the MU-RTS TXS frame 606 may indicate an AID of the STA 1 103. The AID of the STA 1 103 indicated in the user info subfield indicates that the STA 1 103 will share a TXOP. The MU-RTS TXS frame 606 may indicate a length of the TXOP that the AP 1 101 shares with the STA 1 103. The MU-RTS TXS frame 606 may include TXS mode information. The TXS mode information indicates a TXS mode 1 in which the STA 1 103 is capable of performing communication with the AP 1 101 and a TXS mode 2 in which the STA 1 103 is capable of performing P2P communication and communication with the AP 1 101. Information included in the MU-RTS TXS frame 606 may be set based on the TXOP sharing request information transmitted by the STA 1 103 to the AP 1 101. The AP 1 101 may share a TXOP with the STA 1 103 based on transmission of the MU-RTS TXS frame 606. The TXOP thus shared is referred to as a "shared TXOP". Within the shared TXOP, the STA 1 103 may transmit data only to the AP 1 101 or to the AP 1 101 and/or other STAs according to a TXS mode. When the shared TXOP is terminated, the AP 1 101 may transmit a frame to the STA 1 103 and/or other STAs within the remaining segment of the original TXOP. The shared TXOP may also be referred to as an allocated time or allocated duration in the MU-RTS TXS frame.

In another method, when the STA 1 103 transmits the TXOP sharing request information to the AP 1 101, the AP 1 101 may not perform a transmission for a duration corresponding to the information on the size of the requested resource indicated by the STA 1 103, instead of performing a TXOP sharing operation (e.g., a TXOP sharing operation through transmission of the MU-RTS TXS frame 606). The STA 1 103 may perform P2P communication within a TXOP of the AP 1 101. Alternatively, the STA 1 103 may perform non-802.11 communication within a TXOP of the AP 1 101. When the P2P communication or non-802.11 communication of the STA 1 103 ends, the AP 1 101 may transmit an additional frame within the remaining TXOP.

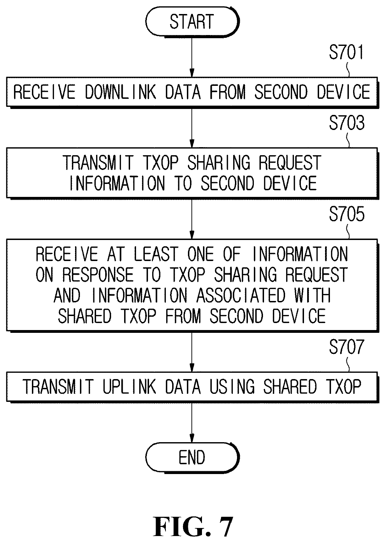

FIG. 7 illustrates a method of operating a first device according to an embodiment of the present disclosure. The first device may be, for example, an STA. The first device may be an STA that holds at least one of data and a frame that need to be quickly transmitted. FIG. 7 exemplifies a method of operating the first device (e.g., the STA 1 103 of FIG. 3 or the STA 1 103 of FIG. 6).

Referring to FIG. 7, at step S701, the first device receives downlink data from a second device (e.g., the AP 1 101 of FIG. 3 or the AP 1 101 of FIG. 6). The downlink data may be included, for example, in a first frame (e.g., the downlink frame 300 of FIG. 3 or the downlink frame 300 of FIG. 6). Here, the second device is a TXOP holder. The first frame is a frame that is transmitted from the second device to the first device. The downlink data may be received at every predetermined time interval (that is, an XIFS). The predetermined time interval may be a time interval shorter than or equal to an SIFS. As another example, the predetermined time interval may be a time interval shorter than or equal to the SIFS. As still another example, the predetermined time interval may be a time interval equal to a PIFS.

At step S703, the first device transmits TXOP sharing request information to the second device. The TXOP sharing request information is information that the first device transmits to share a TXOP from the second device. The TXOP sharing request information may be included in a second frame (e.g., the BA frame 302 of FIG. 3 or the frame 602 including the TXOP sharing request information of FIG. 6). The second frame is a frame that is transmitted from the first device to the second device. The second frame may include one of a data frame (e.g., a PPDU, an MPDU, or an A-MPDU) and a control frame (e.g., a BA frame).

The TXOP sharing request information may be transmitted after the downlink data is received from the second device. For example, the TXOP sharing information may be transmitted in response to the downlink data received from the second device. Alternatively, the TXOP sharing information may be transmitted before a predetermined time interval elapses after the downlink data transmission. In other words, after downlink data reception is completed, the TXOP sharing information may be transmitted before a duration equal to XIFS has passed.

The TXOP sharing request information includes at least one of TXOP request information, delay bound information, information on the size of a requested resource, and information regarding whether to perform P2P communication. The TXOP request information is information indicating that the first device wishes to share a TXOP from the TXOP holder. The delay bound information indicates a time at which the first device wishes to share the TXOP from the TXOP holder. In other words, the delay bound information indicates a start time of TXOP sharing. For example, when the delay bound information has a value of 1 ms, the delay bound information indicates that an STA wishes to share a TXOP before the duration of 1 ms has elapsed after the STA transmits a frame. The delay bound information may indicate a desired time of TXOP sharing for each AC or each TID. Alternatively, the delay bound information may indicate desired times of TXOP sharing for each AC and each TID. The information on the size of a requested resource indicates the size of a resource that the first device wishes to share. Here, the size of the resource may be expressed, for example, as a size in the time domain. Alternatively, the size of the resource may be expressed as a size of data that the first device wishes to transmit. The information regarding whether to perform P2P communication indicates whether the first device is going to perform P2P communication.

The TXOP sharing request information may have various forms and may be included in the second frame. For example, the TXOP sharing request information may be one of A-control, an indication bit, a sub-field, an information element, and other forms and may be included in the second frame.

At step S705, the first device receives at least one of information on a response to the TXOP sharing request and information associated with a shared TXOP from the second device. At least one of the information on a response to the TXOP sharing request and the information associated with a shared TXOP may be included in, for example, a third frame (e.g., the MU-RTS TXS frame 304 of FIG. 3, the data frame 604 and/or the MU-RTS TXS frame 606 of FIG. 6). At least one third frame may be at least one of a data frame (e.g., a QoS Null frame) and a trigger frame (e.g., a MU-RTS TXS frame).

The information on a response to the TXOP sharing request includes information that responds to the TXOP sharing request. The information on a response to the TXOP sharing request includes information that means acceptance or rejection of the TXOP sharing request. The information on a response to the TXOP sharing request may have various forms and may be included in the third frame. For example, the information on a response to the TXOP sharing request may be one of A-control, an indication bit, a sub-field, an information element, and other forms and may be included in the third frame.

The information associated with a shared TXOP may include information that indicates a TXS mode and a length of the shared TXOP. The first device may perform a transmission based on a TXS mode. For example, when the information associated with a shared TXOP indicates a TXS mode 1, the first device may perform a transmission only to the second device. Alternatively, when the information associated with a shared TXOP indicates a TXS mode 2, the first device may perform a transmission to the second device and an STA.

According to an embodiment of the present disclosure, the information on a response to the TXOP sharing request may be included in a data frame (e.g., the data frame 604 of FIG. 6). According to another embodiment of the present disclosure, the information associated with a shared TXOP may be included in a trigger frame (e.g., the MU-RTS TXS frame 304 of FIG. 3 or the MU-RTS TXS frame 606 of FIG. 6).

At step S707, the first device obtains the shared TXOP and transmits uplink data using the obtained shared TXOP. For example, the first device may transmit the uplink data within a shared TXOP time segment. For example, the transmitted uplink data may be in a form used for WLAN communication (e.g., at least one of a data frame and a control frame). For example, the uplink data may be included in a fourth frame. Alternatively, the transmitted uplink data may be data in a form used for non-WLAN communication (e.g., P2P communication or Bluetooth).

Uplink data and downlink data may include user information and control information. The user information may be included in a data frame. The control information may be included in a control frame.

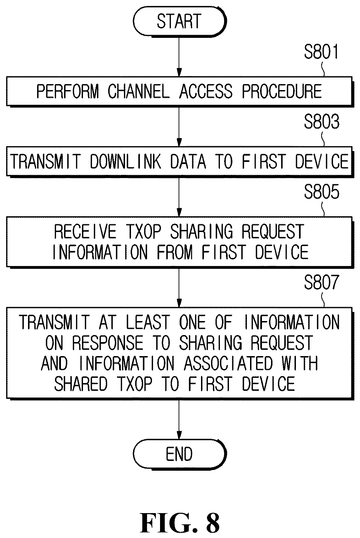

FIG. 8 illustrates a method of operating a second device according to an embodiment of the present disclosure. The second device may be, for example, an AP. FIG. 8 exemplifies a method of operating the second device (e.g., the AP 1 101 of FIG. 3 or the AP 1 101 of FIG. 6).

Referring to FIG. 8, at step S801, the second device performs a channel access procedure. The channel access procedure may be, for example, an EDCA backoff procedure. When the channel access procedure is successful (e.g., an EDCA backoff counter reaches 0), the second device obtains a TXOP. In other words, when the channel access procedure is successful, the second device operates as a TXOP holder.

At step S803, the second device transmits downlink data to the first device. The downlink data may be included, for example, in a first frame (e.g., the downlink frame 300 of FIG. 3 or the downlink frame 300 of FIG. 6). The first frame includes a control frame and a data frame. The second device may transmit at least one piece of downlink data to the first device (e.g., the STA 1 103 of FIG. 3 or the STA 1 103 of FIG. 6). The downlink data may be transmitted at a time interval of an XIFS. The XIFS may be a time interval that is shorter than or equal to, for example, an SIFS. Alternatively, the XIFS may be a time interval that is longer than the SIFS.

At step S805, the second device receives TXOP sharing request information from the first device. The TXOP sharing request information may be included in, for example, a second frame (e.g., the BA frame 302 of FIG. 3). The second frame may include at least one of a data frame (e.g., a PPDU, an MPDU, or an A-MPDU) and a control frame (e.g., a BA frame). The TXOP sharing request information may have various forms and may be included in the second frame. For example, the TXOP sharing request information may be one of A-control, an indication bit, a sub-field, an information element, and other forms and may be included in the second frame.

At step S807, the second device transmits at least one of information on a response to the TXOP sharing request and information associated with a shared TXOP to the first device. At least one of the information on a response to the TXOP sharing request and the information associated with a shared TXOP may be included in a third frame (e.g., the MU-RTS TXS frame 304 of FIG. 3 or the MU-RTS TXS frame 606 of FIG. 6). At least one third frame may be at least one of a data frame (e.g., a QoS Null frame) and a trigger frame (e.g., a MU-RTS TXS frame). The second device generates and transmits the information on a response to the TXOP sharing request based on the TXOP sharing request information transmitted by the first device.

The information on a response to the TXOP sharing request includes information that means acceptance or rejection of the TXOP sharing request. The information on a response to the TXOP sharing request may have various forms and may be included in the third frame. For example, the information on a response to the TXOP sharing request may be one of A-control, an indication bit, a sub-field, an information element, and other forms and may be included in the third frame. The second device generates and transmits the information on a response to the TXOP sharing request based on the TXOP sharing request information transmitted by the first device. For example, the second device may generate the information on a response to the TXOP sharing request, which includes information that accepts the TXOP sharing request based on the TXOP sharing request information transmitted by the first device. Alternatively, the second device may generate the information on a response to the TXOP sharing request, which includes information that rejects the TXOP sharing request based on the TXOP sharing request information transmitted by the first device.

The information associated with a shared TXOP may include information that indicates a TXS mode and a length of the shared TXOP. The TXS mode indicates a method in which the first device performs a transmission. For example, the TXS mode indicates a transmission target device of the first device. For example, when the information associated with a shared TXOP indicates a TXS mode 1, the first device may perform a transmission only to the second device. Alternatively, when the information associated with a shared TXOP indicates a TXS mode 2, the first device may perform a transmission to the second device and an STA. The length of a shared TXOP indicates the time length of a TXOP shared between the second device and the first device. The length of the shared TXOP is shorter than the length of the TXOP obtained by the second device.

According to an embodiment of the present disclosure, the information on a response to the TXOP sharing request may be included in a data frame. According to another embodiment of the present disclosure, the information associated with a shared TXOP may be included in a trigger frame.

The second device may transmit at least one of the information on a response to the TXOP sharing request and the information associated with a shared TXOP at a time interval of, for example, XIFS from the reception of the TXOP sharing request information. When the TXOP sharing request information and the information associated with a shared TXOP are transmitted, the TXOP sharing request information and the information associated with a shared TXOP are transmitted at a time interval of XIFS.

Uplink data and downlink data may include user information and control information. The user information may be included in a data frame. The control information may be included in a control frame.

Although the exemplary methods of the present disclosure are presented as a series of operations for the clarity of description, this is not intended to limit the order in which the steps are performed, and, if necessary, the respective steps may be performed simultaneously or in a different order. To implement the method according to the present disclosure, other steps may be included in addition to the illustrated steps, or some steps may be excluded while including the remaining steps, or additional other steps may be included while excluding some steps.

The various embodiments of the present disclosure do not list all possible combinations, but rather are intended to describe representative aspects of the present disclosure, and the matters described in the various embodiments may be applied independently or in a combination of two or more.

Furthermore, the various embodiments of the present disclosure may be implemented by hardware, firmware, software, or a combination thereof. In the case of hardware implementation, it may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, and the like.

The scope of the present disclosure also includes software or machine-executable instructions (e.g., operating systems, applications, firmware, programs, etc.) that cause the operations according to the methods of the various embodiments to be executed on a device or computer, as well as a non-transitory computer-readable medium on which such software or instructions are stored and executable on the device or computer.

## Claims

1. A method of operating a first device in a wireless local area network (WLAN) system, the method comprising:
receiving downlink data from a second device that holds a transmit opportunity (TXOP) including a time segment that is allocated to transmit data without contention;
transmitting, to the second device, first information that requests sharing of the TXOP;
receiving, from the second device, second information on a shared TXOP that includes a partial time segment within the TXOP; and
transmitting uplink data using the shared TXOP.

2. The method of claim 1, wherein the uplink data includes at least one of control information and user information.

3. The method of claim 1, wherein the first information includes at least one of information indicating a start time of the sharing and information indicating a size of a shared resource.

4. The method of claim 3, wherein the information indicating the start time of the sharing includes information indicating a sharing start time for at least one of each access category (AC) and each traffic indication (TID).

5. The method of claim 3, wherein the size of the shared resource includes a size of data or a time length.

6. The method of claim 1, wherein the receiving of the second information includes receiving a trigger frame including the second information.

7. The method of claim 1, further comprising receiving third information that responds to the first information from the second device.

8. The method of claim 1, wherein the second information includes at least one of a size of the shared TXOP and transmission mode information of the first device.

9. The method of claim 8, wherein the transmission mode information includes information associated with a transmission target device of the first device.

10. A method of operating a second device in a wireless local area network (WLAN) system, the method comprising:
performing a channel access procedure;
obtaining a transmit opportunity (TXOP) including a time segment that is allocated to transmit data without contention based on success of the channel access procedure;
transmitting downlink data;
receiving, from the first device, first information that requests sharing of the TXOP; and
transmitting, to the first device, second information on a shared TXOP that includes a partial time segment within the TXOP.

11. The method of claim 10, further comprising receiving uplink data from the first device by using the shared TXOP,
wherein the uplink data includes at least one of control information and user information.

12. The method of claim 10, wherein the first information includes at least one of information indicating a start time of the sharing and information indicating a size of a shared resource.

13. The method of claim 12, wherein the information indicating the start time of the sharing includes information indicating a sharing start time for at least one of each access category (AC) and each traffic indication (TID).

14. The method of claim 12, wherein the size of the resource includes a size of data or a time length.

15. The method of claim 10, wherein the transmitting of the second information includes
transmitting a trigger frame including the second information.

16. The method of claim 10, further comprising receiving third information that responds to the first information from the second device.

17. The method of claim 10, wherein the second information includes at least one of and transmission mode information of the first device.

18. The method of claim 17, wherein the transmission mode information includes information associated with a transmission target device of the first device.

19. A first device in a wireless local area network (WLAN) system, the first device comprising:
a transceiver; and
a processor coupled to the transceiver,
wherein the processor controls the transceiver to:
receive downlink data from a second device that holds a transmit opportunity (TXOP) including a time segment for transmitting data without contention,
transmit, to the second device, first information that requests sharing of the TXOP,
receive, from the second device, information on a shared TXOP that includes a partial time segment within the TXOP, and
transmit uplink data using the shared TXOP.

20. A second device in a wireless local area network (WLAN) system, the second device comprising:
a transceiver; and
a processor coupled to the transceiver,
wherein the processor is configured to:
perform a channel access, and
obtain a transmit opportunity (TXOP) including a time segment for transmitting downlink data without contention based on success of the channel access procedure, and
controls the transceiver to:
transmit downlink data,
receive, to the first device, first information that requests sharing of the TXOP, and
transmit, to the first device, second information on a shared TXOP that includes a partial time segment within the TXOP.
